# EUROPEAN PATENT SPECIFICATION

(11) **EP 2 772 664 B1**
(45) Date of publication and mention of the grant of the patent: **19.06.2019**
(21) Application number: 14020013.0
(22) Date of filing: 11.02.2014
(51) Int. Cl.: F16H 57/08, F16H 1/32

(54) **Planetary reduction gear and series of the same**
Planetengetriebe und eine Serie davon
Engrenage de réduction planétaire et une série de tels engrenages

(30) Priority: 01.03.2013 JP 2013041317
(43) Date of publication of application: 03.09.2014
(73) Proprietor: SUMITOMO HEAVY INDUSTRIES, LTD., Tokyo 141-6025 (JP)
(72) Inventor: Shizu, Yoshitaka, Obu-shi, Aichi, 474-8501 (JP); Tamenaga, Jun, Obu-shi, Aichi, 474-8501 (JP); ABE, Shun, Obu-shi, Aichi, 474-8501 (JP); Shirouzu, Kenji, Yokosuka-shi, Kanagawa, 237-8555 (JP); Yamamoto, Akira, Obu-shi, Aichi, 474-8501 (JP)
(74) Representative: Wagner, Karl H.

(56) References cited:
- WO-A1-2010/073867
- WO-A1-2011/096243
- JP-A- 2011 236 988
- US-A1- 2008 207 377

## Description

### BACKGROUND OF THE INVENTION

### Field of the Invention

The present invention relates to a planetary reduction gear and a series thereof.

### Description of Related Art

A planetary reduction gear has been disclosed in JP 2011-236988 A (see Figs. 1 and 2).

This planetary reduction gear is configured to have an external gear, an internal gear with which the external gear is internally meshed, and a pair of carrier members respectively arranged on both axial sides of the external gear in a casing.

The casing and the internal gear are configured to be separated from each other. The internal gear is disposed on the inner circumference of the casing and combined to the casing in a shrink fitting manner.

Main bearings which support the pair of carrier members are installed on the internal gear. In other words, the pair of carrier members are supported by the main bearings which are installed on the internal gear disposed on an inner side of the casing.

In the case of the planetary reduction gear disclosed in JP 2011-236988 A (see Figs. 1 and 2), however, two members (the internal gear and the casing) are disposed on a radially outer side of the main bearings, in a mutually superimposed state. Furthermore, practically, each member has a required minimum thickness, and thus it is necessary to provide a space, corresponding to the thickness of the members, further radially outside than the main bearings. Therefore, there is a problem in that the outer diameter of the casing is increased.

Moreover, with regard to the prior art, attention is drawn to US 2008/207377 A1, WO 2011/096243 A1 and WO 2011/073867 A1.

### SUMMARY OF THE INVENTION

The present invention is made to solve such a problem in the prior art. An object of the present invention is to provide a more compact planetary reduction gear.

To solve the problem, there is provided a planetary reduction gear comprising a casing, an external gear, an internal gear with which the external gear is internally meshed, a pair of carrier members respectively arranged on both axial sides of the external gear in the casing, and respective main bearings disposed on both axial sides of the internal gear, the respective main bearings supporting the pair of carrier members, wherein the casing and the internal gear are configured to be separated from each other and the internal gear is disposed on an inner circumference of the casing, wherein the main bearings are supported by the casing without intervention of the internal gear, and wherein one axial end of the internal gear is axially positioned by a retaining ring that is disposed between the internal gear and one of the main bearings and fixed to the casing, and the other axial end of the internal gear is axially positioned by an outer ring of the other main bearing. Preferred embodiments of the present invention may be gathered from the dependent claims.

In the present invention, the pair of main bearings are respectively disposed on both axial sides of the internal gear, in a state where the absolute positions of the pair of the main bearings with respect to the casing are fixed by means of the retaining ring. In other words, parts of the main bearings, which are on a radially outer side, are supported by the casing without intervention of the internal gear. Thus, it is possible to provide a compact planetary reduction gear in which the outer diameter of the casing is reduced.

According to the present invention, it is possible to provide a more compact planetary reduction gear.

### BRIEF DESCRIPTION OF THE DRAWINGS

Fig. 1 is a cross-sectional view of the entirety of a planetary reduction gear according to an example of an embodiment of the present invention.
Fig. 2 is a perspective view of an internal gear main body shown in Fig. 1.

### DETAILED DESCRIPTION OF THE INVENTION

Hereinafter, details of an example of an embodiment of the present invention will be described with reference to the accompanying drawings.

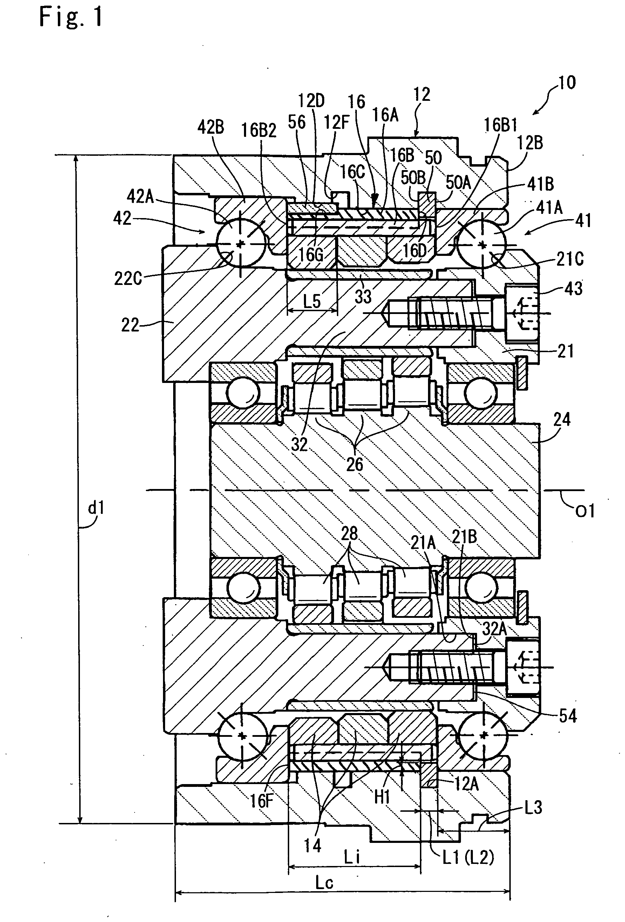

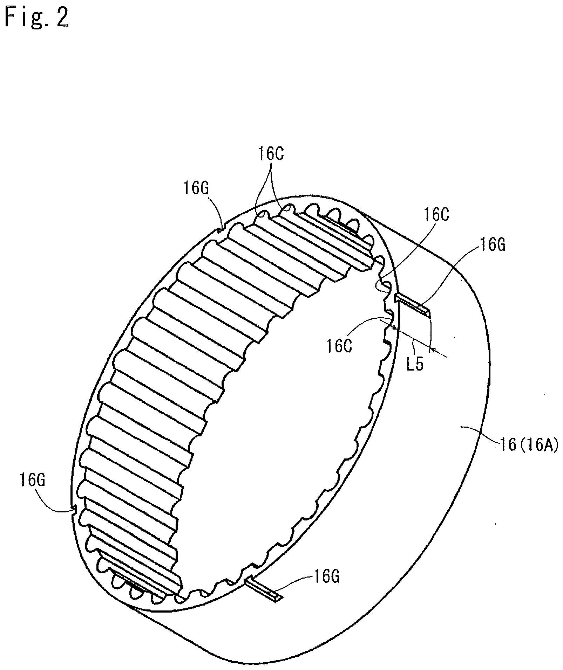

Fig. 1 is a cross-sectional view of the entirety of a planetary reduction gear according to the example of the embodiment of the present invention, and Fig. 2 is a perspective view of an internal gear main body installed therein.

A planetary reduction gear 10 is a so-called eccentric oscillation type planetary reduction gear that is widely used in robot joint driving or a driving system of a machine tool. The planetary reduction gear 10 has a casing 12 in which an external gear 14, an internal gear 16 with which the external gear 14 is internally meshed, and a pair of first and second carriers (carrier members) 21 and 22 which are respectively arranged on both axial sides of the external gear 14 are provided.

Roughly describing, the configuration of a power transmission system of the planetary reduction gear 10, an input shaft 24 of the planetary reduction gear 10 is disposed at an axial center O1 position of the internal gear 16 and connected to a motor (not shown) disposed on the side of the first carrier 21. An eccentric body 26 is integrally formed on the input shaft 24. Three external gears 14 are inserted in parallel into the outer circumference of the eccentric body 26 via a roller 28. The reason why three external gears 14 are inserted is that this ensures improvement in rotation balance and an increase in transmission capacity.

The external gear 14 is internally meshed with the internal gear 16. The number of teeth of the external gear 14 is slightly (only by one in this example) smaller than the number of the teeth of the internal gear 16. The casing 12 and the internal gear 16 are configured to be separated from each other, and the internal gear 16 is disposed on the inner circumference of the casing 12. A configuration of a portion in the vicinity of the casing 12 and the internal gear 16 will be described below.

A pin-shaped member 32 penetrates respective external gears 14. A slide promoting member 33 is externally fitted to the pin-shaped member 32. The pair of first and second carriers 21 and22 are respectively disposed on both axial sides of the external gear 14, as described above. The first and second carriers 21 and 22 are connected with each other by means of the pin-shaped member 32, which is integrally formed with the second carrier 22, and a bolt 43. In addition, a driven member (not shown) is connected to the second carrier 22 by means of a tapped hole (not shown).

The first and second carriers 21 and 22 are supported by the first main bearing (a main bearing on one side) 41, which is on a motor side, and the second main bearing (a main bearing on the other side) 42, which is on a load side. The first and second main bearings 41 and 42 are respectively disposed on both axial sides of the internal gear 16 and are constituted by angular contact ball bearings which are inserted in a back- to-back manner. The first main bearing 41 has a ball 41A as a rolling body, and a dedicated outer ring 41B, and the second main bearing 42 has a ball 42A as a rolling body, and a dedicated outer ring 42B. However, neither bearing has an inner ring (a part (an inner ring functioning portion) 21C or 22C of the outer circumference of the first or second carrier 21 or 22 also functions as an inner ring).

Next, details of the configuration of the portion in the vicinity of the casing 12 and the internal gear 16 will be described with reference to Figs. 1 and 2.

In the embodiment, the casing 12 and the internal gear 16 are configured to be separated from each other and the internal gear 16 is disposed on the inner circumference of the casing 12, as described above. The entirety of the casing 12 is formed in a substantially cylindrical shape. The entirety of the internal gear 16 is also formed in a substantially cylindrical shape. Meanwhile, an axial length Li of the internal gear 16 is shorter that an axial length Lc of the casing 12 (Li<Lc).

The casing 12 is formed of an aluminum-based material with the intention of a decrease in weight and improvement in heat dissipation. In consideration of strength, the internal gear 16 is formed of a steel-based material which is subjected to heat treatment. In other words, the casing 12 and the internal gear 16 are formed of different materials . The casing 12 is formed of a material of which the heat dissipation is higher than the heat dissipation of the internal gear 16 and the specific gravity is smaller than the specific gravity of the internal gear 16. The internal gear 16 is formed of a material of which the hardness is greater than the hardness of the casing 12.

In the embodiment, the internal gear 16 is constituted to have an internal gear main body 16A and a pin member 16B which has a cylindrical shape and constitutes an internal tooth of the internal gear 16. On the internal gear main body 16A, a pin groove 16C which rotationally supports the pin member 16B is formed over the entire internal gear main body 16A in an axial direction. The cross-section of the pin groove 16C has a substantially semicircular shape.

A retaining ring 50 abuts on a motor side end portion (one axial end) 16D (of the internal gear main body 16A) of the internal gear 16. Meanwhile, on the inner circumference of the motor side end portion of the casing 12, a retaining ring groove portion 12A with which the retaining ring 50 is engaged is formed in a ring shape over the entire circumference of the retaining ring groove portion 12A. In this embodiment, the retaining ring groove portion 12A is formed at a position which is away from an axial end portion 12B by a distance as long as an axial length L3 of the outer ring 41B of the first main bearing 41. The retaining ring 50 is fitted to the retaining ring groove portion 12A on the casing 12, and thus the axial position of the retaining ring 50 is fixed on the casing 12. Furthermore, a projection length of the retaining ring 50 from the inner circumference of the casing 12 is set to H1 which is comparatively short. This ensures axial positioning rigidity of the retaining ring 50.

The first main bearing 41 is pressed into the casing 12 until it comes into contact with a motor side end surface 50A of the retaining ring 50, and thus the first main bearing 41 is positioned at the casing 12in the axial direction. In addition, the internal gear 16 is positioned at the casing 12 in the axial direction in such a manner that the motor side end portion 16D, which is one axial end (of the internal gear main body 16A) of the internal gear 16, abuts on a load side end surface 50B of the retaining ring 50. In addition, a load side end portion 16F, which is the other axial end (of the internal gear main body 16A) of the internal gear 16, is positioned at the casing 12 by abutting on the outer ring 42B of the (press-fitted) second main bearing 42.

In other words, the first main bearing 41, the internal gear 16, and the second main bearing 42 are aligned in a state where these members are axially positioned on the inner circumference of the casing 12 by means of the retaining ring 50. In other words, the first and second main bearings 41 and 42 are directly supported by the casing 12 without intervention of the internal gear 16.

The first and second main bearings 41 and 42 are subjected to pressurization adjustment in such a manner that the first and second main bearings 41 and 42 are connected to each other with the bolt 43 via a shim 54 which is interposed between a bottom surface 21B of a recess 21A on the first carrier 21 and a tip end surface 32A of the pin-shaped member 32 of the second carrier 22. That is, the ball 41A of the first main bearing 41, the outer ring 41B of the first main bearing 41, the retaining ring 50, the internal gear main body 16A, the outer ring 42B of the second main bearing 42, and the ball 42A of the second main bearing 42 are interposed between the inner ring functioning portions 21C and 22C of the first and second carriers 21 and 22 by a tightening force which is adjusted by means of the shim 54. As a result, these members are axially positioned at the casing 12, in a state where no gap is provided therebetween in terms of the axial position of the retaining ring 50.

Furthermore, in the embodiment, axial both ends 16B1 and 16B2 of each pin member 16B which constitutes the internal tooth of the internal gear 16 are axially positioned by the outer rings 41B and 42B of the first and second main bearings 41 and 42. In addition, one of the reasons why the projection length H1 of the retaining ring 50 from the inner circumference of the casing 12 is set to be comparatively short is to prevent interference between the retaining ring 50 and the pin member 16B of the internal gear 16. Moreover, the three external gears 14 are also axially positioned by the outer rings 41B and 42B of the first and second main bearings 41 and 42.

In the embodiment, the casing 12 and the internal gear 16 are subjected to clearance fit and relative movement therebetween is regulated in a rotation direction (in a circumference direction). Specifically, a key groove 16G enabling the engagement of the key 56 which regulates the relative movement in the rotation direction is formed on the outer circumference in the vicinity of the load side end portion 16F of the internal gear main body 16A of the internal gear 16. This key groove 16G is not formed over the entire internal gear 16 in the axial direction. The key groove 16G is formed only at a length L5 which is substantially as long as one-third of the entire internal gear 16 in the axial direction (which is about the same as the length of one of the three external gears 14). Incidentally, four key grooves 16G are formed in the circumference direction, as shown in Fig. 2. Meanwhile, four key grooves 12D, each of which has the length L5 in the axial direction, are formed on the casing 12 in the circumference direction, so as to correspond to the key grooves 16G on the internal gear 16. The key grooves 16G on the internal gear 16 are disposed, in terms of the circumference direction, between the pin grooves 16C (in which the pin members 16B are disposed), as shown in Fig. 2. Furthermore, a ring groove 12F on the casing 12, which is shown in Fig. 1, functions as a tool clearance groove when forming the key groove 12D.

Next, an operation of the planetary reduction gear 10 will be described.

When the input shaft 24 rotates, the eccentric body 26 integrally formed on the input shaft 24 rotates. Subsequently, the external gear 14 oscillates via the roller 28. As a result, the meshing position of the external gear 14 with the internal gear 16 is subsequently shifted. The number of teeth of the external gear 14 is smaller than the number of teeth of the internal gear 16 by only one. Therefore, for every rotation of the input shaft 24, the phase of the external gear 14 is shifted (rotates) by a degree of one tooth with respect to the internal gear 16. This rotation component is transmitted to the first and second carriers 21 and 22 via the slide promoting member 33 and the pin-shaped member 32, and thus the driven member which is connected to the second carrier 22 via a tapped hole (not shown) is driven.

As mentioned at the beginning, if, in terms of being radially outside of the main bearings 41 and 42, the casing 12 and the internal gear 16 are configured to be separated from each other in a radially superimposed state, as in the case disclosed in JP 2011-236988 A (see Figs. 1 and 2), there is a problem in that it is practically difficult to reduce the radial size of the planetary reduction gear. In other words, it is necessary for the casing 12 to have a required minimum thickness because sufficiently adequate rigidity and strength is required of the casing. Similarly, even in the case of the internal gear 16, it is also necessary to have a required minimum thickness in order to perform heat treatment on the internal gear 16 and accurately process plurality of pin grooves on the internal gear. For this reason, it is practically not easy for the main bearings 41 and 42 to be reduced in size on the radially outer side. As a result, there is a problem in that it is difficult to reduce the overall size of the planetary reduction gear. Furthermore, there is another problem in that cost and labor are required to perform shrink fit of the casing 12.

According to the embodiment, the pair of first and second main bearings 41 and 42 are respectively disposed on both axial sides of the internal gear 16, in a state where the absolute position of the pair of the first and second main bearings 41, 42 with respect to the casing 12 is fixed by means of the retaining ring 50. In other words, the first and second main bearings 41 and 42 are supported by the casing 12 without intervention of the internal gear 16. Thus, only the casing 12 (except the internal gear) is present on radially outside parts of the first and second main bearings 41 and 42. In addition, the meshing load between the internal gear 16 and the external gear 14 is not directly applied to the radially outside parts of the first and second main bearings 41 and 42, and thus it is not necessary to ensure a thickness as great as that in the meshing portion. Therefore, it is possible to provide a compact planetary reduction gear 10 in which an outer diameter dl of the casing 12 is reduced.

Furthermore, according to the embodiment, the axial both ends 16B1 and 16B2 of the pin member 16B of the internal gear 16 are configured to be axially positioned by the outer rings 41B and 42B of the first and second main bearings 41 and 42, and thus it is not necessary to provide an additional member for positioning of the pin member 16B. Therefore, it is possible to further reduce the cost.

Certainly, in the present invention, when the internal gear 16 includes the pin member 16B, the pin member 16B is not necessarily positioned by the outer rings 41B and 42B of the main bearings 41 and 42. In the present invention, the retaining ring 50 is particularly disposed on the first main bearing 41 side in the casing 12, for example. Thus, it may be configured in a way that the radial projection length H1 of the retaining ring 50 is slightly lengthened such that the pin member 16B (in addition to the internal gear 16) may be positioned by the retaining ring 50 itself.

In the embodiment of the present invention, the positioning of the pin member 16B to the motor side end portion 16B1 is performed, intentionally not by the retaining ring 50 but by the outer ring 41B of the first main bearing 41. In other words, the retaining ring 50 does not have a pin member 16B positioning function. Thus, the projection length H1 of the retaining ring 50 from the inner circumference of the casing 12 can be suppressed to be short. Therefore, it is possible to maintain the high axial rigidity of the retaining ring 50 itself and the high positional regulation rigidity of the retaining ring 50.

Furthermore, in the case of the present invention, the internal teeth of the internal gear are not necessarily formed by the pin members, and an internal gear in which internal teeth are directly formed on an internal gear main body in a gear-cutting manner may be applied. In this case, there is no need to press the internal teeth.

Returning to the description of the operation of the embodiment, the casing 12 and the internal gear 16 of the embodiment are subjected to the clearance fit and the relative movement therebetween is regulated, in a rotation direction, by the key 56. Thus, upon comparison with the shrink fit connection method, the cost is low and the installation is easy. Further, there is no possibility of deformation caused by heat. In addition, in the case of the clearance fit the internal gear 16 is deformed by receiving a load from the external gear 14 side, and thus the internal gear 16 is also self-aligned. Thus, effects such as a gear-cutting error absorbing effect can be obtained.

In addition, a formed length of the key 56 is not as long as the whole axial length Li of the internal gear 16 but is as long as the length L5. Furthermore, a plurality (four) of key grooves 16G are formed in the circumference direction and disposed between the pin grooves 16C in which the pin members 16B of the internal gear 16 are respectively disposed. In this configuration, it is possible to minimize stress concentration in the vicinity of the engaging portion between the key 56 and the internal gear main body 16A while adopting a "connection using a key". Thus, it is possible to maintain the high strength of the internal gear main body 16A.

In the present invention, however, the casing 12 and the internal gear 16 are not necessarily connected in a clearance-fitting manner. Also, the casing 12 and the internal gear 16 are not necessarily connected using the key 56. In the present invention, the connection method such as a shrink fit is also not prohibited, for example. In this case, it is possible to cause internal stress, which is generated in the internal gear 16, to countervail the meshing load, which is generated between the internal gear 16 and the external gear 14, as in the case disclosed in JP 2011-236988 A (see Figs. 1 and 2). Thus, it is possible to achieve a more compact size. Furthermore, the connection method such as a press fit or knurling can also be applied between the casing 12 and the internal gear 16, in addition to the method described above. Thus, a degree of freedom in configuration is high. Further, in a case where the casing 12 and the internal gear 16 are connected in an interference fitting manner such as a shrink fit or a press fit, it is possible to provide a torque limiter function at the time of the application of excessive unexpected load or the like, by adjusting the extent of the interference fit such that the internal gear slides on the casing with an appropriate torque. Therefore, it is possible to effectively protect respective members constituting the power transmission system, without installing a dedicated torque limiter.

In addition, the casing 12 of the embodiment is formed of the aluminum-based material and the internal gear 16 is formed of the steel-based material which is subjected to heat treatment. In other words, the materials forming the casing 12 and the internal gear 16 are different from each other. Thus, it is possible to achieve weight reduction and the improvement in heat dissipation while securing the meshing strength using the hard steel-based internal gear 16. As described above, the material forming the casing can be freely changed without significant restriction to meet "a specific purpose", because of a high degree of connection freedom. It is possible to select, in addition to the aluminum-based material, the various materials by considering cost and purpose. For example, (because the dedicated steel-based internal gear 16 can be provided) the casing 12 can be manufactured at low cost by using casting material.

Here, the embodiment particularly adopts the configuration in which "the casing 12 and the internal gear 16 are configured to be separated from each other, the internal gear 16 is disposed on the inner circumference of the casing 12, and the first and second main bearings 41 and 42 are supported by the casing 12 without intervention of the internal gear 16". Thus, the weight of the internal gear 16 is relatively small, compared to the weight of the casing 12. In other words, the weight of the casing 12 is quite large relative to the weight of the internal gear 16. Therefore, if the weight reduction, the improvement in heat dissipation properties, or the like is intended as in this case, it is possible to very efficiently or significantly achieve the specific purpose.

Moreover, an operation obtained by the fact that "the weight of the internal gear 16 is relatively small, compared to the weight of the casing 12" can cause a remarkable effect in a case where the planetary reduction gears of the embodiment are used in series.

Describing more specifically, the planetary reduction gears 10 according to the embodiment may be used in series in such a manner that a plurality of reduction ratios are respectively allocated to the planetary reduction gears 10, corresponding to a plurality of large-small divisions (large-small divisions are defined conceptionally based on the transfer torque such as allowable torque, rated torque, or peak torque) defined by the magnitude of transmission torque.

Here, in the case of the series of the planetary reduction gears 10, it can be configured in a way that the casings 12 are (in terms of the same large-small divisions) commonly used regardless of the reduction ratios and the internal gear 16 of which the number of teeth (the number of the pin grooves 16C or the number of the pin members 16B) is set to be different in accordance with the reduction ratio is selectively internal-fitted to the casing 12. In the case of this configuration, it is possible to further maintain the effect by the common use of the casing 12 because it is necessary only to manufacture or stock a plurality of the internal gears 16 having the relative weight smaller than the casing 12. Thus, in terms of the entirety of the series, the manufacturing cost and the stocking cost can be significantly reduced.

Furthermore, a so-called center crank type eccentric oscillation planetary reduction gear 10 in which only one input shaft 24 (an eccentric body shaft) provided with the eccentric body 26 is formed in the axis center O1 (a radial center) of the internal gear 16 is exemplified in the embodiment described above. However, as this type of planetary reduction gear, a so-called distribution type eccentric oscillation planetary reduction gear that has a plurality of eccentric body shafts at the position offset from the axial center of an internal gear and causes an external gear to oscillate by rotating, in a synchronized manner, eccentric bodies formed on the plurality of eccentric body shafts also has been known. The present invention can also be applied to the distribution type eccentric oscillation planetary reduction gear in exactly the same way. Furthermore, the present invention can also be applied to the planetary reduction gear having a simple planetary gear speed reduction mechanism or the like.

## Claims

1. A planetary reduction gear comprising:
a casing (12),
an external gear (14),
an internal gear (16) with which the external gear (14) is internally meshed,
a pair of carrier members (21, 22) respectively arranged on both axial sides of the external gear (14) in the casing (12), and
respective main bearings (41, 42) disposed on both axial sides of the internal gear (16), the respective main bearings (41, 42) supporting the pair of carrier members (21, 22),
wherein the casing (12) and the internal gear (16) are configured to be separated from each other and the internal gear (16) is disposed on an inner circumference of the casing (12),
**characterized in that**
the main bearings (41, 42) are supported by the casing (12) without intervention of the internal gear (16), and
one axial end of the internal gear (16) is axially positioned by a retaining ring (50) that is disposed between the internal gear (16) and one of the main bearings (41) and fixed to the casing (12), and
the other axial end of the internal gear (16) is axially positioned by an outer ring (42B) of the other main bearing (42) .

2. The planetary reduction gear according to Claim 1,
wherein the internal gear (16) includes an internal gear main body (16A) and pin members (16B) that are disposed in pin grooves (16C) provided on the internal gear main body (16A), and
wherein axial both ends (16B1, 16B2) of the pin members (16B) are axially positioned by outer rings (41B, 42B) of the main bearings (41, 42).

3. The planetary reduction gear according to Claim 1 or 2,
wherein the casing (12) and the internal gear (16) are subjected to clearance fit, and relative movement therebetween is regulated in a rotation direction.

4. The planetary reduction gear according to any one of Claims 1 to 3,
wherein the internal gear (16) includes the internal gear main body (16A) and the pin members (16B) that are disposed in the pin grooves (16C) provided on the internal gear main body (16A),
wherein the relative movement between the casing (12) and the internal gear (16) is regulated in the rotation direction by keys (56), and
wherein a plurality of the keys (56) are disposed in a circumference direction and arranged between the pin grooves (16C) in which the pin members (16B) are disposed.

5. The planetary reduction gear according to any one of Claims 1 to 4,
wherein the casing (12) and the internal gear (16) are formed of different materials.

## Patentansprüche

1. Planetenuntersetzungsgetriebe, das Folgendes aufweist:
ein Gehäuse (12),
ein außen verzahntes Rad (14),
ein innen verzahntes Rad (16), das sich in Inneneingriff mit dem außen verzahnten Rad (14) befindet,
ein Paar von Trägergliedern (21, 22), die jeweils auf beiden axialen Seiten des außen verzahnten Rads (14) in dem Gehäuse (12) angeordnet sind, und entsprechende Hauptlager (41, 42), die auf beiden axialen Seiten des innen verzahnten Rads (16) angeordnet sind, wobei die entsprechenden Hauptlager (41, 42) das Paar von Trägergliedern (21, 22) stützen bzw. lagern,
wobei das Gehäuse (12) und das innen verzahnte Rad (16) so konfiguriert sind, dass sie voneinander getrennt werden und das innen verzahnte Rad (16) auf einem Innenumfang des Gehäuses (12) angeordnet ist,
**dadurch gekennzeichnet, dass**
die Hauptlager (41, 42) durch das Gehäuse (12) ohne Eingriff des innen verzahnten Rads (16) gestützt bzw. gelagert werden, und
ein axiales Ende des innen verzahnten Rads (16) durch einen Haltering (50) axial positioniert wird, der zwischen dem innen verzahnten Rad (16) und einem der Hauptlager (41) angeordnet und an dem Gehäuse (12) befestigt ist, und
das andere axiale Ende des innen verzahnten Rads (16) durch einen Außenring (42B) des anderen Hauptlagers (42) axial positioniert wird.

2. Planetenuntersetzungsgetriebe gemäß Anspruch 1,
wobei das innen verzahnte Rad (16) einen Hauptkörper (16A) des innen verzahnten Rads und Stiftglieder (16B) aufweist, die in Stiftnuten (16C) angeordnet sind, die an dem Hauptkörper (16A) des innen verzahnten Rads vorgesehen sind, und
wobei die beiden axialen Enden (16B1, 16B2) der Stiftglieder (16B) durch Außenringe (41B, 42B) der Hauptlager (41, 42) axial positioniert werden.

3. Planetenuntersetzungsgetriebe gemäß Anspruch 1 oder 2, wobei das Gehäuse (12) und das innen verzahnte Rad (16) in Spielpassung ausgeführt sind, und die relative Bewegung zwischen diesen in einer Drehrichtung reguliert wird.

4. Planetenuntersetzungsgetriebe gemäß einem der Ansprüche 1 bis 3,
wobei das innen verzahnte Rad (16) den Hauptkörper (16A) des innen verzahnten Rads und die Stiftglieder (16B) aufweist, die in den Stiftnuten (16C) angeordnet sind, die an dem Hauptkörper (16A) des innen verzahnten Rads vorgesehen sind,
wobei die relative Bewegung zwischen dem Gehäuse (12) und dem innen verzahnten Rad (16) in der Rotations- bzw. Drehrichtung durch Passfedern bzw. Keile (56) reguliert wird, und
wobei eine Vielzahl von Keilen (56) in einer Umfangsrichtung angeordnet ist und zwischen den Stiftnuten (16C) angebracht ist, in denen die Stiftglieder (16B) angeordnet sind.

5. Planetenuntersetzungsgetriebe gemäß einem der Ansprüche 1 bis 4, wobei das Gehäuse (12) und das innen verzahnte Rad (16) aus unterschiedlichen Materialien gebildet sind.

## Revendications

1. Engrenage de réduction planétaire, comprenant :
un carter (12),
un engrenage externe (14),
un engrenage interne (16) avec lequel l'engrenage externe (14) est engrené de manière interne,
une paire d'éléments supports (21, 22) agencés respectivement sur les deux côtés axiaux de l'engrenage externe (14) dans le carter (12), et
des roulements principaux respectifs (41, 42) disposés sur les deux côtés axiaux de l'engrenage interne (16), les roulements principaux respectifs (41, 42) supportant la paire d'éléments supports (21, 22),
dans lequel le carter (12) et l'engrenage interne (16) sont agencés pour être séparés entre eux et l'engrenage interne (16) est disposé sur une circonférence intérieure du carter (12),
**caractérisé en ce que**
les roulements principaux (41, 42) sont supportés par le carter (12) sans intervention de l'engrenage interne (16), et
une extrémité axiale de l'engrenage interne (16) est positionnée axialement par une bague de retenue (50) qui est disposée entre l'engrenage interne (16) et l'un des roulements principaux (41) et est fixée au carter (12), et
l'autre extrémité axiale de l'engrenage interne (16) est positionnée axialement par une bague extérieure (42B) de l'autre roulement principal (42).

2. Engrenage de réduction planétaire selon la revendication 1,
dans lequel l'engrenage interne (16) comprend un corps principal d'engrenage interne (16A) et des éléments formant broches (16B) qui sont disposés dans des gorges de broches (16C) prévues sur le corps principal d'engrenage interne (16A), et
dans lequel les deux extrémités axiales (16B1, 16B2) des éléments formant broches (16B) sont positionnées axialement par des bagues extérieures (41B, 42B) des roulements principaux (41, 42) .

3. Engrenage de réduction planétaire selon la revendication 1 ou 2,
dans lequel le carter (12) et l'engrenage interne (16) sont soumis à un ajustement avec jeu, et le mouvement relatif entre eux est régulé dans d'une direction de rotation.

4. Engrenage de réduction planétaire selon l'une quelconque des revendications 1 à 3,
dans lequel l'engrenage interne (16) comprend le corps principal d'engrenage interne (16A) et les éléments formant broches (16B) qui sont disposés dans les gorges de broches (16C) prévues sur le corps principal d'engrenage interne (16A),
dans lequel le mouvement relatif entre le carter (12) et l'engrenage interne (16) est régulé dans la direction de rotation par des clés (56), et
dans lequel plusieurs des clés (56) sont disposées dans une direction de circonférence et sont agencées entre les gorges de broches (16C) dans lesquelles les éléments formant broches (16B) sont disposés.

5. Engrenage de réduction planétaire selon l'une quelconque des revendications 1 à 4,
dans lequel le carter (12) et l'engrenage interne (16) sont formés en des matériaux différents.
